# EUROPEAN PATENT APPLICATION

(11) **EP 2 009 556 A1**
(43) Date of publication of application: **31.12.2008**
(21) Application number: 07720522.7
(22) Date of filing: 23.03.2007
(51) Int. Cl.: G06F 17/24

(54) **ELECTRONIC TABLE DATA PROCESSING METHOD AND SYSTEM BASED ON TIME SEQUENCES**

(30) Priority: 24.03.2006 CN 200610065597
(71) Applicant: Wuxi Evermore Software, Inc, Wuxi City, Jiangsu Province 214028 (CN)
(72) Inventor: WEI, Lijun, Wuxi Jiangsu 214028 (CN); WANG, Yuanbing, Wuxi Jiangsu 214028 (CN)
(74) Representative: Price, Nigel John King
(86) International application number: PCT/CN2007/000948
(87) International publication number: WO 2007/109988

(57) **Abstract**

A method for processing electronic table data based on a time sequence comprises: after receiving processing request information for calculating a data object with a time attribute, reading basic period information in an electronic table, calculating result data according to calculation manner information in the processing request information, and determining a basic period contained in each calculation result data and a writing position of the calculation result data in the electronic table; and generating a computing formula for calculating the basic period contained in the calculation result data, calculating the data object by using the computing formula, and writing the calculation result data generated after calculation into the electronic table according to a requirement of the processing request information. A system for processing electronic table data based on a time sequence comprises: a position determination module and a calculation module.

## Description

### FIELD OF THE TECHNOLOGY

The present invention relates to a method and a system for processing electronic table data based on a time sequence, particularly to a method and a system for performing calculation on data objects with time attributes in an electronic table by using time regularity.

### BACKGROUND OF THE INVENTION

Currently, in practical applications of various fields such as commerce, life, scientific research and so on, it is always needed to perform division and calculation on the data objects with the time attributes in an electronic table according to time regularity. For example, a company's fiscal expenditure condition per month from 2001 to 2005 is recorded in an electronic table. At this time, the data object indicating the fiscal expenditure condition of a month owns a time attribute. If someone wants to know the company's fiscal expenditure condition per quarter during these 5 years, it is needed to divide and summarize the data objects in the electronic table based on the quarter. In prior art, a user is not able to use the time regularity for processing the data objects with the time attributes correspondingly. The user can only manually set a needed computing formula, and input data to be processed one by one for calculation. Then, the user manually fills calculation result data into the electronic table. The user has to do a lot of cumbersome repeatability operations manually because the data amount of the data objects to be calculated is usually quite enormous, which not only wastes the user's time and energy, but also causes low work efficiency and high error rate.

### SUMMARY OF THE INVENTION

With regard to the defects and shortcomings in prior art that it is impossible to use the time regularity to calculate the data object with the time attribute in the electronic table, the object of the present invention is to provide a method and a system for processing electronic table data based on a time sequence. The method can use the time regularity to divide and calculate the data object with the time attribute in the electronic table so as to avoid user's cumbersome operation, improving the work effiency and reducing the error rate. The system can be used to implement the method for processing electronic table data based on a time sequence.

In order to implement the above-mentioned object, the present invention provides a method for processing electronic table data. The method comprises the following steps;
step 1, after receiving processing request information for calculating a data object with a time attribute, reading basic period information in an electronic table, calculating result data according to calculation manner information in the processing request information, and determining a basic period contained in each calculation result data and a writing position of the calculation result data into the electronic table; and
step 2, generating a computing formula for calculating the basic period contained in the calculation result data, calculating the data object by using the computing formula, and writing the calculation result data generated after calculation into the electronic table according to a requirement of the processing request information.

In the above technical solution, before the step 1, the method further comprises:
step A, writing item information, the data object of an item and the basic period information into the electronic table, wherein the item information comprises item name information and address information of a start cell where the item information is located, and the basic period information comprises information of a period type, the number of periods and a start time; and
step B, sending the processing request information for calculating the data object, wherein the processing request information carries the calculation manner information and writing position information of the calculation result data obtained after calculation.

The step of writing the item information into the electronic table in the step A comprises:
step A11, sending request information for writing the item information into the electronic table, wherein the item information comprises item name information and the address information of the start cell where the item information is located; and
step A12, writing the item information into a system table; at the same time, calculating a cell address of the item name information according to start cell address information; and then, writing the item name information into the cell corresponding to the calculated cell address.

The step of writing basic period information into the electronic table in the step A specifically comprises:
step A21, sending request information for writing the basic period information into the electronic table, wherein the basic period information comprises information of a period type, the number of periods and a start time;
step A22, according to the information of the period type, the number of periods and the start time, calculating a time interval of each basic period, and calculating a column number of the cell of the electronic table into which each time interval should be written; and
step A23, writing the time interval and the corresponding column number information into the system table; at the same time, writing the time interval information into the cell corresponding to the column number and in a line corresponding to a start cell address.

It can be seen from the above-mentioned technical solutions that, when writing the data object with the time attribute into the electronic table, the present invention also writes item information and basic period information. In this way, when processing the data object, the user only needs to designate a writing position where the calculation manner and the calculation result data of the data object in the electronic table are written into the electronic table, so that the system can automatically calculate the data objects in a belonged period according to the calculation manner. The operation is simple so as to improve the work efficiency, reduce the error rate and greatly facilitate the users.

In order to implement the above-mentioned subject, the present invention further provides a system for processing electronic table data based on a time sequence. The system comprises a position determination module and a calculation module. The position determination module is adapted to read basic period information in an electronic table, calculate result data and determine a basic period conained in each calculation result data and a writing position of the calculation result data in the electronic table. The calculation module is adapted to generate a computing formula for calculating the basic period contained in the calculation result data, calculate the data object by using the computing formula, and write the calculation result data generated after calculation into the electronic table.

The position determination module in above-mentioned system determines the basic period and the writing position in the electronic table. The calculation module writes the calculation result data into the electronic table. The method for processing electronic table data based on a time sequence according to the present invention is implemented.

The present invention will be described in more detail with reference to the drawings and embodiments.

### BRIEF DESCRIPTION OF THE DRAWINGS

Fig. 1 is a flow chart illustrating the method for processing electronic table data based on a time sequence according to an embodiment of the present invention;

Fig. 2 is a flow chart illustrating the method for processing electronic table data based on a time sequence according to another embodiment of the present invention;

Fig. 3 is a flow chart of writing item information according to the present invention;

Fig. 4 is a flow chart of writing basic period information according to the present invention.

### DETAILED DESCRIPTION OF THE PREFERRED EMBODIMENTS

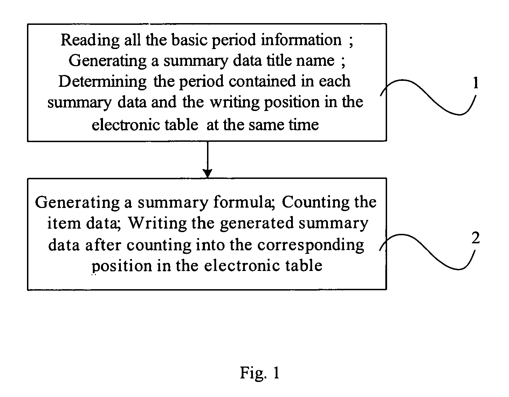

As shown in Fig. 1, it is a flow chart illustrating the method for processing electronic table data based on a time sequence according to an embodiment of the present invention. The method comprises the following steps:

Step 1, when an application program receives processing request information for calculating the data objects with the time attributes, the application program reads all the basic period information pre-written into the electronic table and determines the period contained in each calculation result data and the writing position of the calculation result data into the electronic table according to the calculation manner information in the processing request information. For example, when the application program receives the processing request information for summarizing the data objects indicating the "income" in each month of 2005 based on a quarter, the application program reads the basic period information in the electronic table and determines that the basic period which should be contained in the first quarter of 2005 is January, 2005, February, 2005 and March, 2005. If it is defined that the writing position of each quarter's calculation result data obtained after calculation is behind the basic period contained in each quarter, it is needed to write the income data of the first quarter of 2005 obtained by calculation into the column behind the cell where the data object indicating "income" in March, 2005 in the electronic table is located. In a similar way, the income data of the second quarter of 2005 obtained by calculation is written into the column behind the cell where the data object indicating "income" in June, 2005 in the electronic table is located. The rest may be deduced by analogy.

In order to facilitate the user's observation and enable the user to know the signification of each calculation result data clearly, it is also needed to determine the title name of the calculation result data generated according to the calculation manner information and write into the corresponding position in the electronic table. For example, if a counting manner is defined as counting based on the quarter, the tile name of the calculation result data in the first quarter of 2005 will be "the first quarter of 2005" or "Quarter 1 / 2005". If it is definded that the writing position of the calculation result data in each quarter obtained after calculation is behind the basic period contained in each quarter, it is needed to write the title name into the column behind the basic period "March, 2005" in the electronic table.

Step 2, the application program generates a computing formula for calculating the basic periods contained in each calculation result data, uses the computing formula to calculate the data object, and writes the calculation result data generated after calculation into the corresponding position in the electronic table according to requirement of the processing request information. For example, if it is defined that the counting manner is to count based on a quarter, the start time is Janurary, 2005, and the item name to be calculated is "income", each computing formula may indicate as: sum (income (Janurary, 2005; February, 2005; March, 2005) ) , sum (income (April, 2005; May, 2005; June, 2005) ) ,......, etc., and these computing formulae may be used to summarize the data objects indicating "income" corresponding to the basic periods (e.g. "Janurary, 2005", "February, 2005" and "March, 2005" contained in the first quarter of 2005) contained in each quarter. And the calculation result data of each quarter obtained by summarizaion is respectively written into the cell behind the cell where the item data of the last period conained in each quarter is located. For example, the calculation result data of "income" in "the first quarter of 2005", "the second quarter of 2005", "the third quarter of 2005", and "the fourth quarter of 2005" are respectively written into the cell behind the cell where the data object indicating "income" in "March, 2005", "June, 2005", "Sepetember, 2005", and "December, 2005" is located.

In the step 2, during calculating the data object by using the computing formula, in order to facilitate the application program to indentify the computing formula, the item name information and the period information in the computing formula may be transformed into electronic table adderss information. For example, the period information in the computing formula is transformed into the column number information where the period is located, and the item name information is transformed into the line number information where the item name is located. Then, the line number and the column number information are transformed into the electronic table address information. According to the address information, the computing formula is transformed into an electronic table formula indicated by cell address information. The electronic table formula is used to calculate the item data. For example, if the item name of "income" is at Line 2 and the periods of "Janurary, 2005", "February, 2005" and "March, 2005" are at Column 2, 3 and 4 respectively, the "income", "Janurary, 2005", "February, 2005" and "March, 2005" in the computing formula of sum (income( Janurary, 2005, February, 2005, March, 2005) ) are transformed into cell addresses of A2, B1, C1 and D1 and an electronic table formula of "=sum (B1, C1, D1)" is generated, i.e. the data at Column 2, 3 and 4 in Line 2 are calculated.

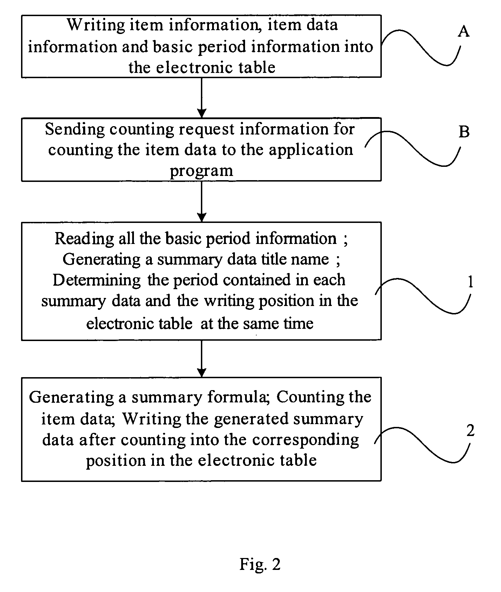

Fig. 2 is a flow chart illustrating the method for processing the electronic table data based on a time sequence according to another embodiment of the present invention. In the present embodiment, the steps are added before the step 1 in the previous embodiment as follows;

Step A, item information, the data object of the item and the basic period information are written into the electronic table. The item information comprises the information such as an item name (e.g. "income", "expenditure") information and a start cell address (e.g. Line 1, Colunm 2) of the item information and so on. The basic period information comprises the information such as a period type (e.g. year, month, week and so on), the number of periods (i.e. how many periods are defined) and the start time (e.g. Janurary, 2005) and so on.

Step B, the processing request information for calculating the data object is sent to the application program. The processing request information carries calculation manner information and writing position information of the calculation result data obtained after calculation. For example, request information is sent to the application program after counting the data objects in the item of "income" based on the quarter and writing respectively the calculation result data of each quarter obtained after counting into the period contained in each quarter.

During writing the data object with a time attribute into the electronic table, the item information and the basic period information are also written so that it is convenient to establish mutual relationship among the three according to the cell addresses of the three. The user only needs to designate the data object needed to be calculated and the calculation manner, and then the application program may use the time regularity to automatically divide and calculate the data object according to the calculation manner acquired by the user without user's manual calculation one by one, which simplifies the user's operation flow, at the same time, improves the work efficiency, reduces information manual input and error rate, and facilitates the user.

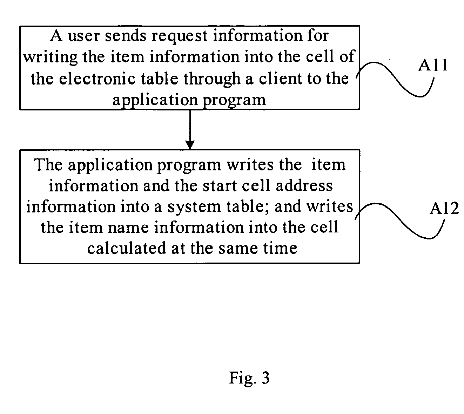

In the step A, there is no limitation for time order of writing the item information, the data object and the basic period information into the electronic table. All the above information may be written at the same time or any one or two pieces of information may be written at first. The operation of writing the item information into the electronic table may be implemented according to the flow shown in Fig. 3 as follows;

Step A11, the user sends request information for writing the item information into the cell of the electronic table to the application program throuth a client. The item information comprises the item name, e.g. "income", "expenditure" information, and the start cell address of the item information, e.g. the information of Line 1, Colunm 2. Certainly, for the sake of convenienc in the future, the user may also add other information into the item information such as type (e.g. currency)information of the data object, length information of the data object, format information of the data object, and formula information of the data object, e.g. "income - expenditure".

Step A12, the application program writes the item information and the start cell address information into the system table; at the same time, calculates the cell address of the item name information according to the start cell address; and then writes the item name information into the cell corresponding to the cell address.

The method for calculating the cell address of the item name information may specifically comprise: adding 1 to the line number in the start cell address so as to obtain the cell address of the item name information. For example, the start cell address is Line 1, Conlunm 2, and the item name information of "income" is written into the cell of Line 2, Column 2.

In the step A11, the user may also configure a default value for the data object in the item information. After configuring the data object, the application program may write the configured default value at the cell where the line in which the item name information is located intersects the column in which the basic period information is located. The specific number of columns may be determined according to the number of periods configured by the user, that is, the number of periods is defined in the above-mentioned step 1. For example, the cell address where the item name information of "income" is located is Line 2, Column 2 and the default value configured for the "income" in each period is 1000 so that a data "1000" is written into the cell corresponding to the column where all the basic periods are located in Line 2 of the electronic table. The speicifc number of columns which are written into is determined and configured by the user. In the same one item, if the data of "income" in most periods are the same, the default number may be configured when the item information is defined so that the application program may automatically input data of each period for the user without inputing one by one by the user, which simplifies the user's operation flow and facilitates the user.

Between the step A11 and the step A12, the application program further verifies whether the item information input by the user is right. If it is right, the step A12 is executed; otherwise, the operation ends. For example, the application program judges whether the item informationa contains a formula. If it contains the formula, the application program judges whether the formula is right. Specifically, the application program may judge whether the formula is right by judging the field quoted whether existing by the formula. For example, when the formula is "income-expenditure", the application program may resolve the formula into an "income" and "expenditure" field and inquire whether the "income" and "expenditure" field exists in the system table. If it exists, it is indicated that the formula is right, i.e. the item information input by the use is right, so the step A12 is executed; otherwise, it is indicated that the item information input by the user is wrong, so the application program will not write the item information and the start cell address information into the system table. In this way, it prevents the user from inputting wrong information in time, avoids the consumption of system resources caused by processing the wrong information by the application program and avoids the waste of the user's time and energy because of unnecessary follow-up operations.

Between the step A and the step B, the application program further judges whether a basic period information exists in the system table. If no basic period information exists, the operation ends; otherwise, the application program further judges whether a formula is contained in the item information. If no formula is contained, the step B is executed; otherwise, the application program resolves the formula. If the formula contains an item name, the application program obtains the line number of the item name in the electronic table and the column number of each basic period in the electronic table. The application program generates the corresponding cell address respectively according to the line number and each column number, substitutes the corresponding item name in the formula with the cell address, and writes the new formula generated after substitution into the cell where the line in which the item name containing the formula is located intersects the column respectively in which each basic period is located. For example, the item information "profit" contains a formula "income - expenditure"; the line number of the item information "income" in the electronic table is 2, the line number of the item information "expenditure" in the electronic table is 3; the line number of the item information "profit" in the electronic table is 4; and the column numbers where the basic periods "Janurary, 2005", "February, 2005" and "March, 2005" are located are 2, 3, and 4 respectively. The new formulae generated for the basic periods "Janurary, 2005", "February, 2005" and "March, 2005" are "=B2-B3", "=C2-C3" and "=D2-D3" respectively. The three formulae are respectively written into the cell in which the addersses are B4, C4 and D4 in the electronic table.

In addition, between the step A and the step B, through a client operation interface, the step of writing the calculation manner information for calculating the data object in the electronic table and the writing position information of the calculation result data obtained after calculation is further executed.

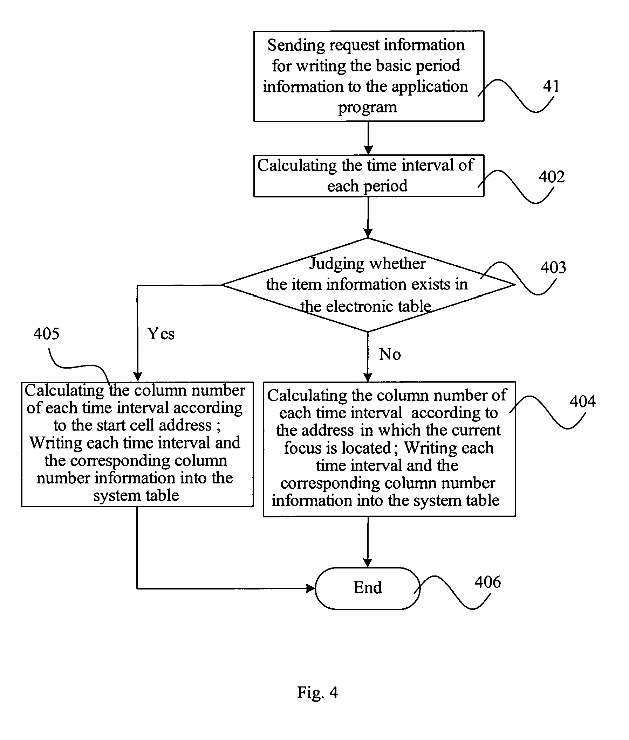

As shown in Fig. 4, it illustrates a specific flow of writing the basic period information into the electronic table according to the present invention. It comprises the following steps:

Step 401, a user sends request information for writing basic period information into the electronic table to the application program through a client. The basic period information comprises information of a period type such as day, week, month, quarter and year, the number of periods, and a start time of an item such as Janurary, 2005;

Step 402, the application program calculates the time interval of each period according to the information of period type, the number of periods and the start time. For example, under the situation that the period type is quarter, the start time is Janurary 1st, 2005, for the period type is quarter and the time interval of adjacent period is 3 months, the time interval of each period of the item is obtained by adding 3 months in turn based on the start time of Janurary 1st, 2005 respectively. When the number of periods is 3, each period of the item is Janurary 1st, 2005, April 1st, 2005, July 1st, 2005 respectively;

Step 403, the application program judges whether the item information exists in the electronic table, if no item information exists, a step 404 is executed; otherwise, a step 405 is executed;

Step 404, the application program calculates the column number of the cell where each time interval needs to be written into the electronic table respectively according to the cell address where the current focus is located, generates the corresponding time interval information according to each time interval and the corresponding column number thereof, and then writes the time interval information into the system table, and at the same time, also writes each time interval information such as Janurary 1st, 2005, April 1st, 2005 and July 1st, 2005 respectively into the corresponding cell. After that, a step 406 is executed;

Step 405, the application program calculates the column number of the cell where each time interval needs to be written into the electronic table respectively according to the start cell address of the item information, generates the corresponding time interval information according to each time interval and the corresponding column number thereof, writes each time interval information into the system table, and at the same time, writes the time interval information such as Janurary 1st, 2005, April 1st, 2005 and July 1st, 2005 respectively into the corresponding cell;

Step 406, the end.

In the step 404 and 405, when the application program calculates the column number of the cell where each time interval needs to be written into the electronic table respectively, the application program may specifically performs the calculation in the following manners: adding 1 to the column number of the start cell address or the cell address where the current focus is located to obtain the cell address of the first period; adding 1 to the column number of the cell address of the first period to obtain the cell address of the second period; deducing by analogy similarly, adding n (n is a integer grater than 0) to the column number of the start cell address or the cell address where the current focus is located obtain the cell address of the nth period. For example, a start cell address of the item information is Line 1, Column 2; from the beginning of the first period, the cell addresses of the item information of each period are: Line 1, Column 3; Line 1, Column 4; Line 1, Column 5,......, and so on in turn, i.e. the column numbers are: Column 3, Column 4, Column 5,......, and so on in turn. According to the example in the step 112, "Janurary 1st, 2005", "April 1st, 2005" and "July 1st, 2005" are written at Line 1, Column 3; Line 1, Column 4; and Line 1, Column 5 respectively.

Between the step 405 and the step B, the application program furhter judges whether item information exists in the system table. If no item information exists, the operation ends; otherwise, the application program furhter judges whether item name information containing formula exists. If no item name information containing formula exists, the step B is executed; otherwise, the application program resolves the formula. If the formula contains an item name, the application program obtains the line number of the item name in the electronic table and the column number of each basic period in the electronic table. The application program generates the corresponding cell address respectively according to the line number and each column number, substitutes the corresponding item name in the formula with the cell address, and writes the new formula generated after substitution into the cell where the line in which the item name containg the formula is located intersects the column respectively in which each basic period is located.

In the above embodiments, the user may modify the item information in the electronic table. When the application program receives new item information input by the user, it may substitute the original item information with the new item information and substitute the original item name in the electronic table with the new item name at the same time. If the insertion position of the item information is modified, the item name will be moved to the new position and at the same time, all the data on the line where the item name is located will be moved to the line of the new position where the item name is located with the column number of eahc item data keeping the same. After that, the application program furhter judges whether another item name in the item information quotes the item name modified, i.e. whether the item name indicated by a formula contains a modified item name. If it does not quotes, the operation ends; otherwise, the application program substitutes the original item name with the new item name and writes the new formula generated after substitution into the system table and the electronic table.

A system for processing electronic table data based on a time sequence comprises a position determination module and a calculation module. After the position determination module receives processing request information for calculating a data object with a time attribute, the position determination module reads basic period information in the electronic table, calculates result data according to the calculation manner information in the processing request information, and determines the basic period contained in each calculation result data and the writing position where the calculation result data is located in the electronic table. The calculation module generates a computing formula for calculating the basic period contained in the calculation result data, calculates the data object by using the computing formula, and writes the calculation result data generated after calculation into the electronic table according to the processing request information.

The system may further comprise a writing module and a sending module. The writing module writes the item information, the data object of the item and the basic period information into the electronic table. The item information comprises item name information and the address information of the start cell where the item information is located. The basic period information comprises the information of the period type, the number of periods and the start time. The sending module sends processing request information for calculating the data object. The processing request information carries the calculation manner information and the writing position information of the calculation result data obtained after calculation.

The above-mentioned writing module may comprise an item information request writing module and an item information writing module. The item information request writing module sends request information for writing item information into the electronic table. The item information comprises item name information and address information of the start cell where the item information is located. The item information writing module writes the item information into the system table according to the request information sent by the item information request writing module, calculates the cell address of the item name information in the item information, and writes the item name information into the cell corresponding to the calculated cell address.

The above-mentioned writing module may further comprise a basic period request writing module, a time interval calculation module and a time interval writing module. The basic period request writing module sends request information for writing basic period information into the electronic table. The basic period information comprises the information of the period type, the number of periods and the start time. The time interval calculation module, according to the information of the period type, the number of periods and the start time in the request information sent by the basic period request writing module, calculates the time interval of each basic period, and calculates the column number of the cell of the electronic table into which each time interval should be written. The time interval writing module writes the time interval and the corresponding column number information calculated by the time interval calculation module into the system table and writes the time interval information into the cell corresponding to the column number in the line corresponding to the start cell address.

The above-mentioned time interval calculation module may comprise a table item information judgment module, a first column number calculation module and a second column number calculation module. The table item information judgment module judges whether item information exists in the electronic table. If no item information exists, the first column number calculation module, according to the address of the cell where the current focus is located, calculates the column number of the cell of the electronic table into which the time interval should be written; otherwise, the second column number calculation module calculates the column number of the cell of the electronic table into which the time interval should be written according to the start cell address.

Between the above writing module and the sending module, there may be further provided with an item information judgment module, a formula judgment module and a formula generating module. The item information judgment module judges whether item information exists in the system table. If the item information exists, the formula judgment module judges whether the item information contains a formula. If it contains a formula, the formula generating module resolves the formula contained in the item information to be an item name, substitutes the cell address where the line in which the item name is located intersects the column respectively in which each basic period is located into the formula to generate a new formula, and writes the new formula into the cell determined by the line where the item name containing the formula is located and the column where each basic period is located.

Between the writing module and the sending module, it is further provided with a calculation manner and position writing module. The calculation manner and position writing module writes the calculation manner information for calculating the data object in the electronic table and the writing position information of the calculation result data obtained after calculation.

The above-mentioned calculation module may comprise a statistc module. The statistc module transforms the item name information and the period information into electronic table address information, transforms the summary formula into an electronic table formula indicated by cell address information, and counts the item data.

The above-mentioned system for processing electronic table data based on a time sequence determines the writing position of the basic period and calculation result contained by the calculation result in the electronic table through the position determination module. The calculation module writes the generated calculation result into the electronic table. The method for processing electronic table data based on a time sequence according to the present invention is implemented by the system.

Finally, it should be understood that the above embodiments are only used to explain, but not to limit the technical solution of the present invention. In despite of the detailed description of the present invention with referring to above preferred embodiments, it should be understood that various modifications, changes or equivalent replacements can be made by those skilled in the art without departing from the scope of the present invention and covered in the claims of the present invention.

## Claims

1. A method for processing electronic table data based on a time sequence, comprising:
step 1, after receiving processing request information for calculating a data object with a time attribute, reading basic period information in an electronic table, calculating result data according to calculation manner information in the processing request information, and determining a basic period contained in each calculation result data and a writing position of the calculation result data into the electronic table; and
step 2, generating a computing formula for calculating the basic period contained in the calculation result data, calculating the data object by using the computing formula, and writing the calculation result data generated after calculation into the electronic table according to a requirement of the processing request information.

2. The method according to claim 1, before the step 1, further comprising:
step A, writing item information, the data object of an item and the basic period information into the electronic table, wherein the item information comprises item name information and address information of a start cell where the item information is located, and the basic period information comprises information of a period type, the number of periods and a start time; and
step B, sending the processing request information for calculating the data object, wherein the processing request information carries the calculation manner information and writing position information of the calculation result data obtained after calculation.

3. The method according to claim 2, wherein the step of writing the item information into the electronic table in the step A comprises:
step A11, sending request information for writing the item information into the electronic table, wherein the item information comprises item name information and the address information of the start cell where the item information is located; and
step A12, writing the item information into a system table; at the same time, calculating a cell address of the item name information according to start cell address information; and then, writing the item name information into the cell corresponding to the calculated cell address.

4. The method according to claim 3, wherein the item information in the step A11 further comprises the data object of the item.

5. The method according to claim 3, between the step A12 and the step B, further comprising:
step A13, judging whether the basic period information exists in the system table; executing a step A16 if no basic period information exists; otherwise, executing a step A14;
step A14, judging whether a formula is included in the item information; executing the step B if no formula is included; otherwise, executing a step A15;
step A15, resolving the formula to be an item name, substituting the cell address where the line in which the item name is located and intersects the column respectively in which each basic period is located into the formula to generate a new formula, and writing the new formula into the cell determined by the line where the item name containing the formula is located and the column where each basic period is located; and
step A 16, ending.

6. The method according to claim 2, wherein the step of writing basic period information into the electronic table in the step A specifically comprises:
step A21, sending request information for writing the basic period information into the electronic table, wherein the basic period information comprises information of a period type, the number of periods and a start time;
step A22, according to the information of the period type, the number of periods and the start time, calculating a time interval of each basic period, and calculating a column number of the cell of the electronic table into which each time interval should be written; and
step A23, writing the time interval and the corresponding column number information into the system table; at the same time, writing the time interval information into the cell corresponding to the column number and in a line corresponding to a start cell address.

7. The method according to claim 6, wherein the step of calculating the column number of the cell of the electronic table into which each time interval should be written in the step A 22 speicifcially comprises:
step A221, judging whether the item information exists in the electronic table; executing a step A222 if no item information exists; otherwise, executing a step A223;
step A222, calculating the column number of the cell of the electronic table into which the time interval should be written according to an address of the cell where a current focus is located; and
step A223, calculating the column number of the cell of the electronic table into which the time interval should be written according to the start cell address.

8. The method according to claim 6, between the step A23 and the step B, further comprising:
step A24, judging whether the item information exists in the system table; executing a step A27 if no item information exists; otherwise, executing a step A25;
step A25, judging whether the item information contains a formula: executing the step B if no formula is included; otherwise, executing a step A26;
step A26, resolving the formula to be an item name, substituting the cell address where the line in which the item name is located intersects the column respectively in which each basic period is located into the formula to generate a new formula, and writing the new formula into the cell determined by the line where the item name containing the formula is located and the column where each basic period is located; and
step A27, ending.

9. The method according to claim 2, between the step A and the step B, further comprising:
writing the calculation manner information for calculating the data object into the electronic table and the writing position information of the calculation result data obtained after calculation.

10. The method according to claim 1, wherein the step 1 further comprises: generating a title name of the calculation result data according to the calculation manner information in the processing request information and writing the title name into the electronic table.

11. The method according to claim 1, wherein the step of using the computing formula to count the item data in the step 2 comprises:
transforming the item name information and the basic period information in the summary formula into electronic table address information;
transforming the summary formula into an electronic table formula indicated by cell address information according to the electronic table address information; and
counting the item data by using the electronic table formula.

12. A system for processing electronic table data based on a time sequence, comprising:
a position determination module adapted to read basic period information in an electronic table, calculate result data and determine a basic period conained in each calculation result data and a writing position of the calculation result data in the electronic table; and
a calculation module adapted to generate a computing formula for calculating the basic period contained in the calculation result data, calculate the data object by using the computing formula, and write the calculation result data generated after calculation into the electronic table.

13. The system according to claim 12, further comprising:
a writing module adapted to write item information, the data object of an item and the basic period information into the electronic table;
a sending module adapted to send processing request information for calculating the data object.

14. The system according to claim 13, wherein the writing module comprises:
an item information request writing module adapted to send request information for writing the item information into the electronic table; and
an item information writing module adapted to write the item information into a system table according to the request information sent by the item information request writing module, calculate a cell address of an item name information in the item information, and write the item name information into the cell corresponding to the calculated cell address.

15. The system according to claim 13, wherein the writing module comprises:
a basic period request writing module adapted to send request information for writing the basic period information into the electronic table;
a time interval calculation module adapted to calculate the time interval of each basic period and the column number of the cell of the electronic table into which each time interval should be written according to the request information sent by the basic period request writing module; and
a time interval writing module adapted to write the time interval information and the corresponding column number information calculated by the time interval calculation module into a system table, and write the time interval information into the cell.

16. The system according to claim 15, wherein the time interval calculation module comprises:
a table item information judgment module adapted to judge whether the item information exists in the electronic table;
a first column number calculation module adapted to calculate the column number of the cell of the electronic table into which the time interval should be written according to a judgment result of the table item information judgment module and an address of the cell where the current focus is located; and
a second column number calculation module adated to calculate the column number of the cell of the electronic table into which the time interval should be written according to a judgment result of the table item information judgment module and a start cell address.

17. The system according to claim 14 or 15, between the writing module and the sending module, further comprising:
an item information judgment module adapted to judge whether the item information exists in the system table;
a formula judgment module adapted to judge whether a formula is included in the item information according to a judgment result of the item information judgment module; and
a formula generating module adapted to resolve the formula contained in the item information to be an item name, substitute the cell address where the line in which the item name is located intersects the column respectively in which each basic period is located into the formula to generate a new formula, and write the new formula into the cell determined by the line where the item name containing the formula is located and the column where each basic period is located.

18. The system according to claim 13, between the writing module and the sending module, further comprising: a calculation manner and position writing module adapted to write calculation manner information for calculating the data object into the electronic table and writing position information of the calculation result data obtained after calculation.

19. The system according to claim 12, wherein the calculation module comprises: a statistc module adapted to transform the item name information and the basic period information into electronic table address information, transform a summary formula into an electronic table formula indicated by cell address information, and count item data.
